# EUROPÄISCHE PATENTSCHRIFT

(11) **EP 0 796 774 B1**
(45) Veröffentlichungstag und Bekanntmachung des Hinweises auf die Patenterteilung: **01.12.1999**
(21) Anmeldenummer: 97104167.8
(22) Anmeldetag: 12.03.1997
(51) Int. Cl.: B60R 22/46, B60R 22/28

(54) **Gurtaufroller mit an der Gurtspule angreifendem Gurtstraffer**
Belt retractor with tensioner operating on the belt spool
Rétracteur de ceinture de sécurité comportant un prétentionneur venant en prise avec la bobine d'enroulement

(30) Priorität: 20.03.1996 DE 29605200 U
(43) Veröffentlichungstag der Anmeldung: 24.09.1997
(73) Patentinhaber: TRW Occupant Restraint Systems GmbH & Co. KG, 73551 Alfdorf (DE)
(72) Erfinder: Ebner, Ralf, 74417 Gschwend (DE); Weyhmüller, Günter, 73553 Alfdorf (DE); Holzapfel, Volker, 66606 St. Wendel (DE)
(74) Vertreter: Kitzhofer, Thomas, Dipl.-Ing.

(56) Entgegenhaltungen:
- DE-A- 4 000 313
- DE-A- 4 227 781

## Beschreibung

Die Erfindung betrifft einen Gurtaufroller mit einem an einer Gurtspule über einen ersten Kupplungsmechanismus angreifenden Gurtstraffer, einem Gehäuse, einer fahrzeug- und/oder gurtbandsensitiven Blockierautomatik für die Gurtspule und einem zweiten Kupplungsmechanismus, der einen Kraftfluß zwischen dem Gehäuse und der Gurtspule nach erfolgter Gurtstraffung und bei Bewegung der Gurtspule in Gurtabzugsrichtung herstellt, wobei der erste Kupplungsmechanismus kraftausgangsseitig und der zweite Kupplungsmechanismus krafteingangsseitig mit dem ersten Ende eines Torsionsstabes verbunden sind, dessen zweites Ende an der Gurtspule angeschlossen ist, und wobei eine mit dem zweiten Kupplungsmechanismus verbundene Inaktivierungsvorrichtung für die Blockierautomatik vorgesehen ist.

Ein derartiger Gurtaufroller ist bereits aus der DE 42 27 781 A1 bekannt. Nach beendeter Gurtstraffung erfolgt eine begrenzte Rückdrehung der Gurtspule, wobei der Torsionsstab plastisch verformt wird, so daß eine gewünschte Energiewandlung bei der plötzlichen Vorverlagerung des Fahrzeuginsassen nach beendeter Gurtstraffung erfolgt. Dadurch wird Energie verzehrt, und die im Gurtband auftretenden Lastspitzen werden weitgehend absorbiert. Um bei der Vorverlagerung die Blockierautomatik, die typischerweise eine Sperrklinke zum Blockieren der Gurtspule aufweist, außer Kraft zu setzen und so eine Verdrehung des Torsionsstabs zu erlauben, ist an einem Außenring des zweiten Kupplungsmechanismus die Inaktivierungsvorrichtung in Form eines Steuernockens vorgesehen, welcher in der Anfangsphase der Vorverlagerung, wenn der zweite Kupplungsmechanismus einrastet, zusammen mit dem Außenring verdreht wird und dabei die Sperrklinke außer Eingriff bringt. Der erste und der zweite Kupplungsmechanismus sind als Klinkenkupplungen ausgebildet, die aber erst bei einer bestimmten Drehbeschleunigung einrasten.

Aufgabe der Erfindung ist es, einen Gurtaufroller zu schaffen, der mögliche Verzögerungen beim Einrasten der entsprechenden Teile des zweiten Kupplungsmechanismus vermeidet.

Diese Aufgabe wird bei einem Gurtaufroller der eingangs genannten Art dadurch gelöst, daß dem zweiten Kupplungsmechanismus mindestens ein radial nachgiebiges Lager zugeordnet ist, das durch den Straffvorgang eine Verschiebung von Teilen des zweiten Kupplungsmechanismus zueinander erlaubt, so daß dieser in einen eingerasteten Zustand gelangt.

Der Erfindung liegt die Erkenntnis zugrunde, daß zwischen dem Ende des Straffvorgangs und der anschließenden Vorverlagerung des Fahrzeuginsassen eine kurze Zeitspanne eintritt, in der der zweite Kupplungsmechanismus noch nicht in eingerastetem Zustand ist, da er erst bei Erreichen einer bestimmten Drehbeschleunigung, nach Beginn der Vorverlagerung, in seine Spert-Stellung gelangt. Der erfindungsgemäße Gurtaufroller nutzt nicht die Drehbeschleunigung aufgrund der Vorverlagerung des Fahrzeuginsassen, um den zweiten Kupplungsmechanismus in seine Sperr-Stellung zu überführen. Vielmehr wird beim erfindungsgemäßen Gurtaufroller bereits der Straffvorgang selbst dazu benutzt, um eine Verschiebung von Teilen des zweiten Kupplungsmechanismus zueinander mittels eines radial nachgiebigen Lagers zu erlauben, so daß der zweite Kupplungsmechanismus schon während des Straffvorgangs in seine Sperr-Stellung gelangt und anschließend in dieser Spert-Stellung verharrt. Da der erste und der zweite Kupplungsmechanismus unterschiedliche Freilaufrichtungen haben, kann der zweite Kupplungsmechanismus, wenn der erste Kupplungsmechanismus während des Straffvorgangs in seiner Sperr-Stellung ist, frei mitlaufen, obwohl er für die Verdrehung in Gegenrichtung bereits seine Sperr-Stellung erreicht hat. So steht bei Beginn der Vorverlagerung der zweite Kupplungsmechanismus in bereits eingerastetem Zustand für eine Drehmomentübertragung zur Verfügung. Der zweite Kupplungsmechanismus kann zudem wesentlich einfacher aufgebaut sein, da Klinken nicht mehr erforderlich sind. Das nachgiebige Lager kann dabei beispielsweise ein radial verschiebliches Lager oder ein elastisch verformbares Lager sein.

Gemäß einer vorteilhaften Ausführungsform erfolgt die radiale Verschiebung der Teile zueinander durch die Kraft des Gurtstraffers bei einer Gegenkraft des Gurtbandes. Die Wirkungsrichtung des Gurtstraffers muß mit Bezug auf die Gurtbandabzugsrichtung so gewählt sein, daß sich die Gurtspule bei der Straffung am Gurtband abstützt und es so zur radialen Verschiebung der Teile zueinander kommt. Bei dieser Ausführungsform können zusätzliche Teile, die eine Abstützung der Kraft bei der Straffung und dadurch eine radiale Verschiebung ermöglichen, entfallen.

Vorzugsweise umfaßt der zweite Kupplungsmechanismus einen Außenring und ein bei eingerastetem Kupplungsmechanismus formschlüssig mit diesem gekoppeltes Innenrad, die eine innere bzw. äußere Kupplungsverzahnung in Form einer Sägeverzahnung haben können. Diese Sägeverzahnung läßt ein Verdrehen des Außenrings zum Innenrad in einer Drehrichtung zu, wogegen in der entgegengesetzten Drehrichtung aufgrund von Formschluß eine Drehmitnahme erfolgt. Bei dieser besonders einfachen Ausführungsform müssen also lediglich das Innenrad und der Außenring radial so zueinander verschoben werden, daß die Sägeverzahnungen miteinander in Eingriff gelangen.

Das radial nachgiebige Lager kann verschiedenartig ausgeführt und mit unterschiedlichen Teilen gekoppelt sein. Beispielsweise kann das Innenrad radial nachgiebig gelagert sein. Insbesondere kann das Innenrad aus Kunststoff gebildet werden und einen flexiblen Abschnitt aufweisen, der das nachgiebige Lager bildet. Darüber hinaus können auch andere Teile nachgiebig, d.h. radial verschiebbar gelagert sein, indem, gemäß einer bevorzugten Ausführungsform, die nachgiebige Lagerung ein flexibles Kunststoffteil umfaßt, das ferner auch Ausnehmungen aufweisen kann, die eine radiale Verschiebung erleichtern.

Ferner kann der Torsionsstab selbst gurtstrafferseitig radial nachgiebig gelagert sein, so daß der Straffvorgang eine radiale Verschiebung des Torsionsstabes und ein Verschieben von auf ihm gelagerten Teilen des zweiten Kupplungsmechanismus bewirkt. In der bevorzugten Ausführungsform ist der Torsionsstab mittels einer radial nachgiebigen Lagerplatte gehaltert.

Eine weitere Möglichkeit, um die radiale Verschiebung von Teilen des zweiten Kupplungsmechanismus zueinander zu erlauben, besteht darin, die Gurtspule radial nachgiebig zu lagern, beispielsweise indem sie einen Lagerfortsatz hat, der flexibel ist.

Gemäß einer Ausführungsform ist der erste Kupplungsmechanismus als Klinkenkupplung ausgebildet, wobei zur Einsparung von Teilen das Innenrad des zweiten Kupplungsmechanismus vorzugsweise ein zylindrisches Rad des ersten Kupplungsmechanismus bildet.

Weitere Merkmale und Vorteile der Erfindung ergeben sich aus der folgenden Beschreibung und aus den Zeichnungen, auf die Bezug genommen wird. In diesen zeigen:
- Fig. 1 eine perspektivische Explosionsdarstellung einer Ausführungsform des erfindungsgemäßen Gurtaufrollers im Bereich zwischen der Gurtspule und dem Gurtstraffer;
- Fig. 2 einen Längsschnitt durch die Gurtspule des in Fig. 1 gezeigten Gurtaufrollers gemäß einer ersten Ausführungsform mit mehreren radial nachgiebigen Lagern;
- Fig. 3 einen langsschnitt durch eine Gurtspule eines Gurtaufrollers an der Gurtstrafferseite gemäß einer zweiten Ausführungsform, der dem in Fig. 1 gezeigten Gurtaufroller weitgehend entspricht, in unbelasteter Normalstellung;
- Fig. 4 den in Fig. 3 gezeigten Gurtaufroller mit radial verschobenem Torsionsstab bei Gurtstraffung;
- Fig. 5 eine teilweise schematische Seitenansicht des Gurtstraffers nach Fig. 3 mit nichteingerastetem zweiten Kupplungsmechanismus, wobei in dieser Ansicht auch axial versetzt zu einer Schnittebene angeordnete Teile in die Schnittebene hineinprojiziert sind;
- Fig. 6 eine der Fig. 5 entsprechende Querschnittsansicht in normaler Sperr-Stellung der Gurtspule ohne Gurtstraffung;
- Fig. 7 eine der Fig. 5 entsprechende Querschnittsansicht, die den erfindungsgemäßen Gurtaufroller in der Phase nach erfolgter Gurtstraffung zeigt; und
- Fig. 8 eine der Fig. 5 entsprechende Querschnittsansicht, die den Gurtaufroller bei der Vorverlagerung des Fahrzeuginsassen zeigt, wenn der Gurtaufroller als Kraftbegrenzer wirkt.

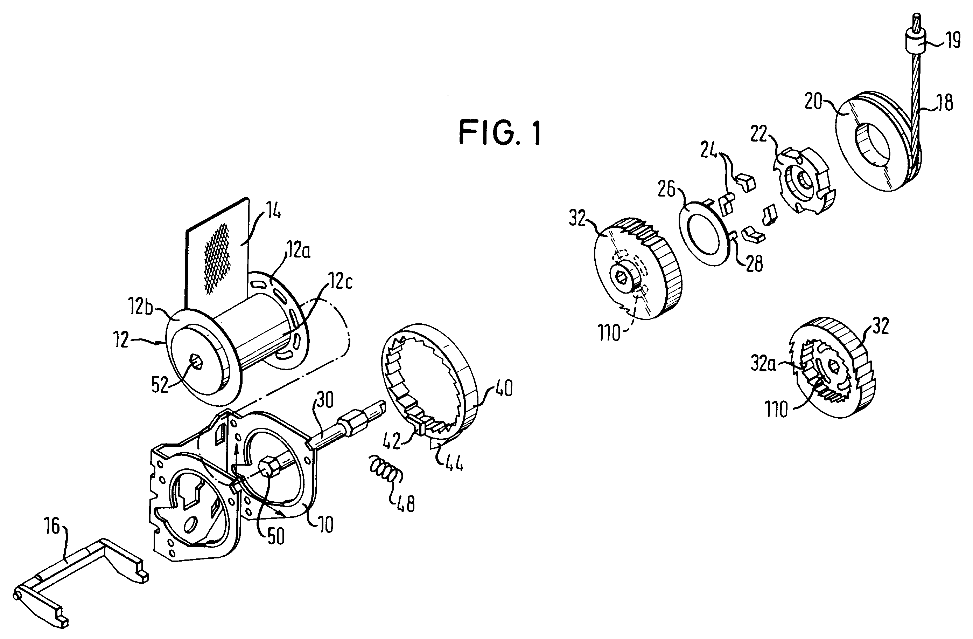

Bei der in den Fign. 1 bis 8 gezeigten beiden Ausführungsform eines Gurtaufrollers mit einem Gurtstraffer ist zwischen den Schenkeln eines lasttragenden Gehäuses 10 eine Gurtspule 12 drehbar gelagert. Auf die Gurtspule 12 wird das Gurtband 14 aufgewickelt. Die beiden gezeigten Ausführungsformen des Gurtaufrollers entsprechen teilweise einander, so daß sich die folgende Beschreibung des Aufbaus des Gurtaufrollers auf beide Ausführungsformen bezieht, soweit Unterschiede nicht angegeben sind.

An der in Fig. 1 linken Seite des Gehäuses 10 befinden sich eine herkömmliche, daher nicht dargestellte Blockierautomatik mit einem Ansteuermechanismus für die Gurtspulenblockierung und eine am Ende der Gurtspule 12 angreifende Aufrollfeder, welche die Gurtspule 12 in Gurtaufrollrichtung beaufschlagt. Eine Sperrklinke 16 blockiert die Drehung der Gurtspule 12 in Gurtabzugsrichtung fahrzeugsensitiv und/oder gurtbandsensitiv.

Auf der gegenüberliegenden Seite des Gehäuses 10 befinden sich die Funktionsteile, die für die Gurtstrafferfunktion und eine sich daran anschließende Energiewandlungsfunktion benötigt werden.

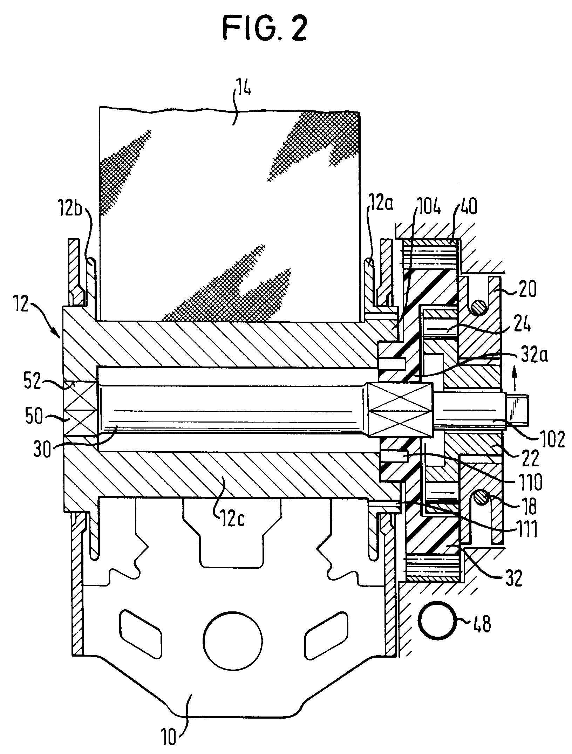

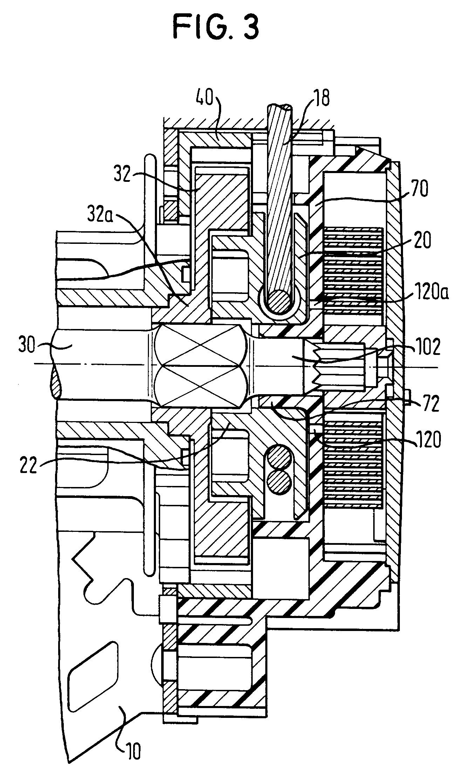

Hierzu gehören ein Zugseil 18, auf das bei Auslösung des Gurtstrafferantriebs eine Zugkraft ausgeübt wird, beispielsweise durch einen pyrotechnishen Linearantrieb, eine Trägheitsmasse, eine vorgespannte Feder oder dergleichen. Das Zugseil 18 greift am Umfang einer Seilrolle 20 an, um das es mit mindestens einer Windung herumgelegt ist. Die Seilrolle 20 ist gemäß der Ausführungsform und den Figuren 1 und 2 auf einem ersten zylindrischen Absatz eines Klinkenrads 22 als Teil eines ersten Kupplungsmechanismus angeordnet und triebschlüssig mit dem Klinkenrad 22 gekoppelt. Bei der in den Fign. 3 bis 8 gezeigten Ausführungsform ist die Seilrolle 20 einstückig mit dem Klinkenrad 22 verbunden.

Das Klinkenrad 22 weist an seiner Umfangsfläche vier in Umfangsrichtung beabstandete, verschwenkbar angeordnete Klinken 24 auf. Die Klinken 24 sind gegenüber einer 90°-Teilung paarweise um eine halbe Zahnteilung versetzt, um einen sicheren Kupplungseingriff zu gewährleisten. Auf einer Scheibe 26 angebrachte Blattfedern 28 belasten die Klinken 24 in bezug auf das Klinkenrad 22 radial nach innen, so daß diese nur bei Überwindung der Federkraft ausschwenken können. Die Scheibe 26 ist konzentrisch am Klirkenrad 22 angeordnet.

Das Klinkenrad 22 ist drehbar auf einem dem Gurtstraffer zugewandten Ende eines Torsionsstabes 30 gelagert, der koaxial im Inneren der Gurtspule 22 angeordnet ist.

Ein Innenrad 32 ist einteilig mit einem zylindrischen Rad 32a ausgebildet, das mit einer dem Klinkenrad 22 zugeordneten inneren Kupplungsverzahnung das Klinkenrad 22 umgreift und mit diesem koaxial um den Torsionsstab 30 angeordnet sowie formschlüssig mit dem Torsionsstab 30 verbunden ist.

Die Klinken 24 sind derart schwenkbar an der Umfangsfläche des Klinkenrads 22 gelagert, daß sie bei einer bestimmten Drehbeschleunigung des ersten Klinkenrads 22 und der damit verbundenen Seilrolle 20 ausschwenken, in die innere Kupplungsverzahnung des Innenrads 32 eingreifen und somit die Seilrolle 20 über das Innenrad 32 und den Torsionsstab 30 an die Gurtspule 12 koppeln.

Das Innenrad 32 weist auf seiner äußeren Mantelfläche eine äußere Kupplungsverzahnung in Form einer Sägeverzahnung auf, wobei in Fig. 1 nur einige Zähne gezeigt sind.

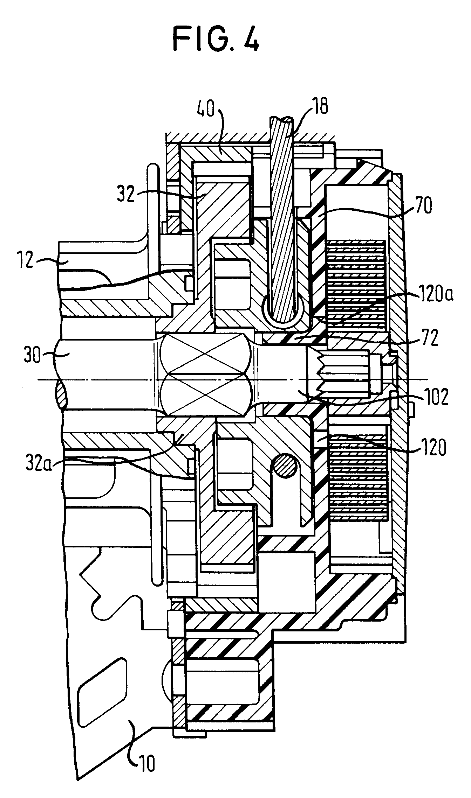

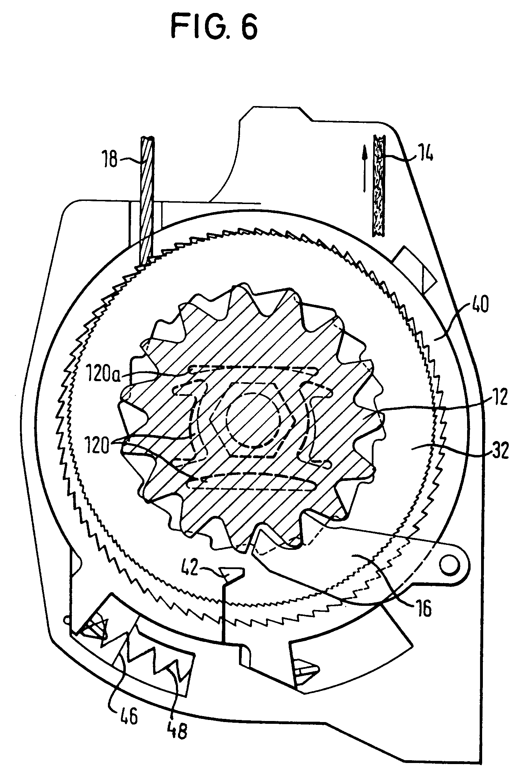

Um das Innenrad 32 herum ist ein eine innere Kupplungsverzahnung in Form einer Sägeverzähnung aufweisender Außenring 40 vorgesehen, der in einer mit dem Gehäuse 10 verbundenen Lagereinrichtung aufgenommen ist. Die innere Kupplungsverzahnung ist dabei gröber ausgeführt als die äußere (vgl. Fign. 4 bis 8). Beide Kupplungsverzahnungen sind so schräg gerichtet, daß trotz der Anlage der Verzahnungen (vgl. Fig. 6) diese bei Gurtstraffung ohne Drehmomentübertragung aufeinander gleiten, sich bei Gurtbandabzug ineinander verhaken und das Innenrad 32 und den Außenring 40 fest miteinander koppeln.

Der Außenring 40 weist an seiner dem Gehäuse 10 zugewandten Seite einen Steuernocken 42 auf, der bei Drehung des Außenrings 40 in Gurtbandabzugsrichtung an der Sperrklinke 16 angreift und diese nach unten in eine inaktive Stellung bewegt. Dadurch ist der Blockiermechanismus ausgeschaltet.

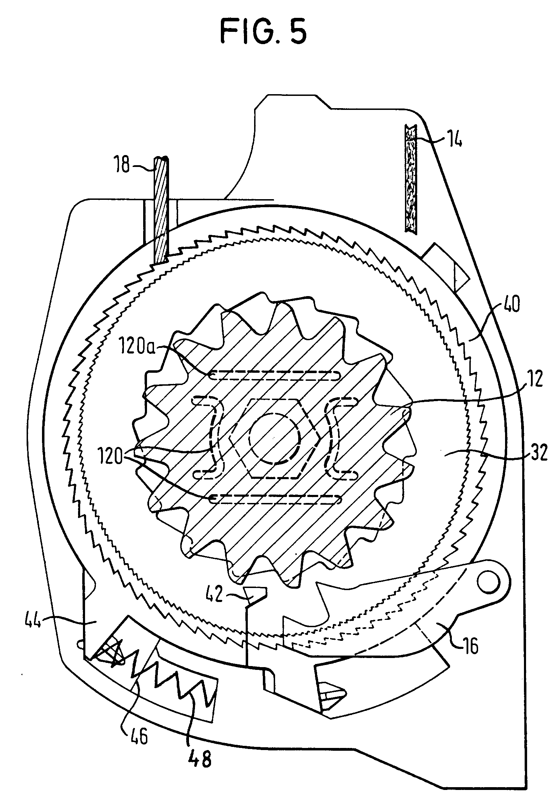

Zudem ist der Außenring 40 an seiner Umfangsfläche mit einem Anschlagteil 44 versehen. Einen entsprechenden, diesem Anschlagteil 44 zugeordneten Anschlag 46 weist das Gehäuse 10 auf seiner dem Gurtstraffer zugewandten Seite auf (vgl. Fig. 5). Zwischen dem Anschlagteil 44 und dem Anschlag 46 ist eine Druckfeder 48 angeordnet, durch die der Außenring 40 von dem Anschlag 46 fort vorbelastet wird. Bei Einkuppeln des Innenrads 32 in den Außenring 40 wird dieser gegen die Kraft der Druckfeder gedreht, bis das Anschlagteil 44 an dem Anschlag 46 anstößt und jede weitere Drehung des Außenrings 40 blockiert wird. An seinem von dem Gurtstraffer abgewandten axialen Ende ist der Torsionsstab 30 mit einem gerändelten Kopfstück 50 versehen, das in eine passend gestaltete Ausnehmung 52 der Gurtspule 12 formschlüssig eingesetzt ist. Die Gurtspule 12 besteht im wesentlichen aus zwei seitlichen Flanschen 12a, 12b und einem im wesentlichen hohlzylindrischen Mantel 12c, der einen hier nicht dargestellten Schlitz für den Durchgang des auf der Gurtspule 12 aufzuwickelnden Gurtbandes 14 aufweist. Der Torsionsstab 30 erstreckt sich durch den hohlzylindrischen Innenraum des Mantels 12c der Gurtspule 12. Das Ende des Gurtbandes 14 bildet eine Schlaufe, die auf den Torsionsstab 30 aufgeschoben ist, welche durch das gerändelte Kopfstück 50 drehfest mit der Gurtspule 12 verbunden ist. Im Ruhezustand (vgl. Fign. 2 und 5) sind die Kupplungsverzahnungen des Außenrings 40 und des Innenrads 32 sowie die Klinken 24 des Klinkenrads 22 mit ihrer zugeordneten inneren Kupplungsverzahnung außer Eingriff, so daß die Gurtspule 12 mit dem Torsionsstab 30 ungehindert drehbar ist.

Wie später anhand der Funktionsweise des Gurtaufrollers noch näher erläutert wird, ist das Innenrad 32 radial verschiebbar gelagert und zwar derart, daß durch den Gurtstraffvorgang eine Verschiebung des Innenrads 32 radial nach außen bewirkt wird, bis deren äußere Kupplungsverzahnung in die innere Kupplungsverzahnung des Außenrings 40 eingreift. Um diese radiale Verschiebung zu erlauben, ist wenigstens ein radial nachgiebiges Lager, das dem zweiten Kupplungsmechanismus zugeordnet ist, notwendig. Die Ausführung der Lager ist in den beiden gezeigten Ausführungsformen unterschiedlich. In der in Fig. 2 gezeigten Ausführungsform sind mehrere radial nachgiebige Lager vorgesehen, die aber nicht notwendigerweise alle gemeinsam in einem Gurtaufroller vorhanden sein müssen, um die Verschiebung des Innenrads 32 zu ermöglichen. In der in Fig. 3 gezeigten Ausführungsform ist hingegen nur ein radial nachgiebiges Lager vorgesehen.

Gemäß Fig. 2 ist ein radial nachgiebiges Lager durch das Innenrad 32 selbst gebildet, welches aus einem flexiblen Kunststoff mit darin enthaltener Glasfaserverstärkung hergestellt ist. Das innere Rad 32a als Teil des Innenrads 32 weist hierzu stirnseitig mehrere Ausnehmungen 110 auf, die als durchgehende oder nichtdurchgehende Ausnehmungen ausgebildet sein können.

Darüber hinaus ist auch die Gurtspule 12, in der das Innenrad 32, wie in Fig. 2 gezeigt, teilweise aufgenommen sein kann, radial nachgiebig gelagert. Ein einstückig mit ihr verbundener Lagerfortsatz 104 hat hierzu mehrere Ausnehmungen 111, die sich axial durch den Lagerfortsatz 104 hindurch erstrecken, so daß die Gurtspule und damit auch alle in ihr gelagerten Teile bei einer vorbestimmten Kraft gurtstrafferseitig radial verschiebbar sind.

In der in Fig. 2 gezeigten Ausführungsform, in der die einzelnen Teile des ersten und des zweiten Kupplungsmechanismus sowie der Torsionsstab 30 ineinander gelagert sind, ist damit auch der Torsionsstab 30 indirekt gurtstrafferseitig radial nachgiebig gelagert.

Alternativ ist es jedoch auch möglich, wie in Fig. 3 gezeigt, eine separate Lagerung für den Torsionsstab 30 vorzusehen, indem sein Torsionsstabfortsatz 102 axial soweit nach außen verlängert wird, daß er in einer in Fig. 4 gezeigten radial nachgiebigen Lagerplatte 70 in einer einstückig daran angeformten Buchse 72 aufgenommen wird. Die Lagerplatte 70 ist vorzugsweise aus Kunststoff hergestellt, mit dem Gehäuse 10 verbunden und weist mehrere Ausnehmungen 120 sowie eine oberste Ausnehmung 120a auf. Auf der äußeren Mantelfläche der Buchse 72 ist das Klinkenrad 22 drehbar gelagert. Die Lagerung der Gurtspule 12 direkt an dem Gehäuse 10 kann dabei gurtstrafferseitig sogar entfallen, da die Gurtspule 12 indirekt über das Innenrad 32, den Torsionsstab 30 und die Lagerplatte 70 lagefest gehalten ist.

Bei beiden Ausführungsformen ist damit im Ruhezustand, wenn die Gurtspule unbelastet ist und kein Straffvorgang erfolgt, der Torsionsstab 30 koaxial zum Außenring 40 gelagert, so daß die äußere Kupplungsverzahnung des Innenrads 32 die innere Kupplungsverzahnung des Außenrings 40 nicht berührt. Dies ist in Fig. 5 dargestellt.

In Fig. 6 ist die Situation im Gurtaufroller bei normaler Sperr-Funktion gezeigt, wenn die Sperrklinke 16 in eine entsprechende Verzahnung an der Gurtspule 12 eingreift. Die normale Sperr-Funktion des Gurtaufrollers wird durch einen Zug im Gurtband 14 bewirkt. Wenn das Gurtband 14 nach oben gezogen wird, ergibt sich ein Drehmoment am Innenrad 32, das sich teilweise an der Sperrklinke 16 abstützt und somit zu einer radialen Verschiebung des Innenrads 32 nach oben führt, bis sich deren äußere Kupplungsverzahnung in der inneren Kupplungsverzähnung des Außenrings 40 abstützt. Die Ausnehmungen 120, die diese Verlagerung ermöglichen, sind ebenfalls in Fig. 6 angedeutet. Bei der Verschiebung des Innenrads 32 nach oben wird dieses so zusammengedrückt, daß eine obere Ausnehmung 120a teilweise sogar verschwindet.

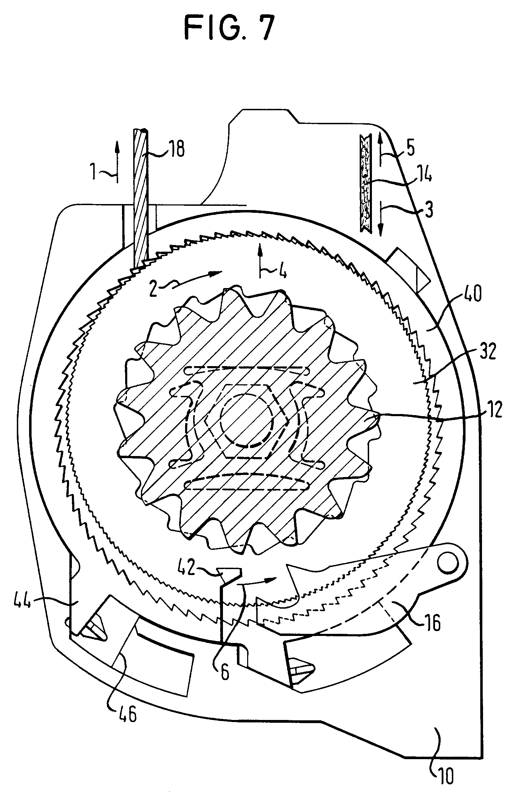

Die aufeinanderfolgenden Abläufe bei Aktivierung des Gurtstrafferantriebs sind durch die durchnumerierten Pfeile in Fig. 7 angedeutet. Bei Gurtstraffung in Richtung des Pfeils 1 wird in an sich bekannter Weise über das Zugseil 18 ein Drehmoment am Umfang der Seilrolle 20 ausgeübt. Durch die dann erfolgende Drehung der Seilrolle 20 werden zunächst die Klinken 24 des Klinkenrads 22 in Kupplungseingriff mit der inneren Kupplungsverzahnung des Innenrads 32 bewegt, so daß die Seilrolle 20, das Klinkenrad 22, das Innenrad 32 und der Torsionsstab 30 fest miteinander gekoppelt sind. Durch den Torsionsstab 30 wird die Drehung der Seilrolle 20 auf die Gurtspule 12 übertragen. Diese wird in Aufrollrichtung 2 angetrieben, so daß die Gurtlose aus dem Sicherheitsgurtsystem herausgezogen und das Gurtband 14 gestrafft wird. Nach beendeter Gurtstraffung bleiben die beiden Klinkenräder 22 und 32 miteinander gekoppelt, so daß der Torsionsstab 30 weiterhin drehfest mit der Seilrolle 20 verbunden ist.

Während der Gurtstraffung erzeugt die Kraft des Gurtstraffers über den eingeklinkten ersten Kupplungsmechanismus eine Gegenkraft gemäß Pfeil 3 im Gurtband 14, die zu einer radialen Verschiebung des Torsionsstabs 30 gurtstrafferseitig und damit des Innenrads 32 gemäß Pfeil 4 nach oben gegen die durch die Lagerplatte 70 bei deren flexibler Verformung entstehende Rückstellkraft führt. In Fig. 4 ist dabei gut zu erkennen, daß es durch die Verschiebung des Torsionsstabs 30 zu einer elastischen Verformung in der Lagerplatte 70 kommt, was dazu führt, daß die oberste Ausnehmung 120a teilweise verschwindet, indem gegenüberliegende Wandungen aneinandergepreßt werden. Dies ist auch in den Fign. 6 bis 8 gezeigt. Bei der in Fig. 2 gezeigten Ausführungsform wird der Torsionsstab 30 bei Gurtstraffung ebenfalls nach oben in Richtung des Pfeiles gedrückt, wodurch das Innenrad 32 ebenfalls nach oben verschoben wird, bis seine äußere Kupplungsverzahnung an die innere Kupplungsverzahnung des Außenrings 40 stößt. Bei dieser Verschiebung kommt es zu einer Deformierung des Innenrads 32 im Bereich der Ausnehmungen 110 sowie der Gurtspule im Bereich der Ausnehmungen 111. Obwohl nach der Verschiebung des Innenrads 32 die Kupplungsverzahnungen ineinandergreifen, kann weiterhin eine Verdrehung des Innenrads in Richtung des Pfeiles 2 erfolgen, da die Sägeverzahnungen eine Drehmitnahme in nur einer Richtung, entgegengesetzt zum Pfeil 2, erlauben.

Während der kurzen Phase zwischen dem Straffvorgang und der anschließenden Vorverlagerung des Insassen bleiben die innere und äußere Kupplungsverzahnung miteinander in Eingriff, d.h., der zweite Kupplungsmechanismus bleibt weiterhin in eingerastetem Zustand, den er schon während des Straffvorgangs eingenommen hat.

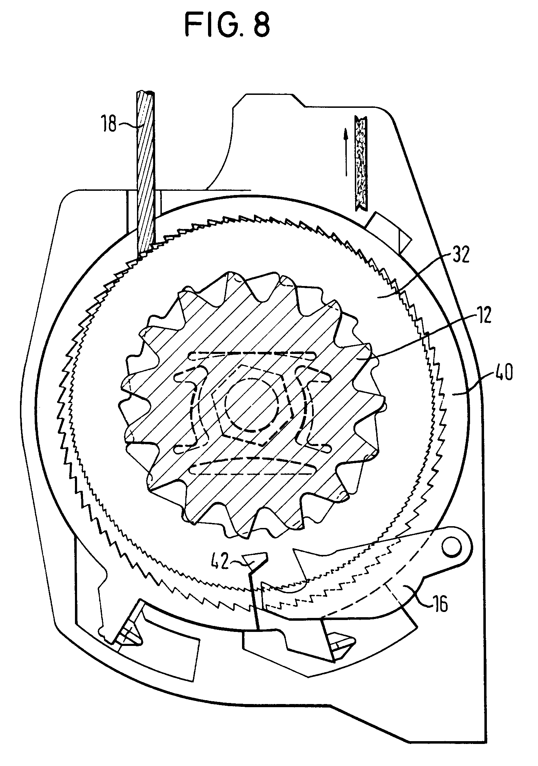

Sobald eine Vorverlagerung des Fahrzeuginsassen stattfindet, wird eine Zugwirkung im Gurtband 14 in Richtung des Pfeiles 5 erfolgen, die zu einer Verdrehung des Innenrads 32 in Richtung des Pfeiles 6 führt. Über die Kupplungsverzahnungen wird unmittelbar, d.h. ohne zeitliche Verzögerung, der Außenring 40 mitgenommen. Dieser dreht sich dadurch in Richtung des Pfeiles 6 zusammen mit seinem Steuernocken 42, bis dieser sich über der Sperrklinke 16 befindet, so daß die Sperrklinke 16 bei der Vorverlagerung nicht in ihre Raststellung gelangen kann. Dies ist in Fig. 8 gezeigt. Bei der Vorverlagerung tritt eine hohe Last im Sicherheitsgurtsystem auf, und über das Gurtband 14 wird ein entsprechend hohes Drehmoment auf die Gurtspule 12 ausgeübt. Da jedoch der Torsionsstab 30 zwischen die Gurtspule 12 und das Innenrad 32 eingefügt ist, kann sich der Torsionsstab 30 verdrehen und plastisch verformen. Durch diese plastische Verformung wird Energie verzehrt und werden die im Gurtband 14 auftretenden Lastspitzen weitgehend absorbiert. Durch Dimensionierung und Materialwahl können sowohl die Schwelle, ab welcher die plastische Formung des Torsionsstabes 30 einsetzt, als auch sein weiteres Verhalten und die dadurch erzielte Dämpfungswirkung nahezu beliebig eingestellt werden.

Wenn anschließend das Gurtband 14 entlastet wird, lösen sich die Kupplungsmechanismen. Zudem wird der Außenring 40 durch die Feder, die zwischen dem Anschlag 46 und seinem Anschlagteil 44 vorhanden ist, in seine Ausgangsstellung zurückgedreht und dadurch die Aufrollfunktion sowie die Blockierautomatik wieder freigegeben.

Ein weiterer Vorteil des gezeigten Gurtaufrollers besteht darin, daß der als Kraftbegrenzer wirkende Torsionsstab 30 nur dann so tordiert wird, daß er auch als Kraftbegrenzer wirkt, wenn zuvor eine Straffung erfolgt ist.

## Patentansprüche

1. Gurtaufroller mit einem an einer Gurtspule (12) über einen ersten Kupplungsmechanismus (22, 24) angreifenden Gurtstraffer, einem Gehäuse (10), einer fahrzeug- und/oder gurtbandsensitiven Blockierautomatik für die Gurtspule (12) und einem zweiten Kupplungsmechanismus (32, 40), der einen Kraftfluß zwischen dem Gehäuse (10) und der Gurtspule (12) nach erfolgter Gurtstraffung und bei Bewegung der Gurtspule (12) in Gurtabzugsrichtung herstellt, wobei der erste Kupplungsmechanismus (22, 24) kraftausgangsseitig und der zweite Kupplungsmechanismus (32, 40) krafteingangsseitig mit dem ersten Ende eines Torsionsstabes (30) verbunden ist, dessen zweites Ende an der Gurtspule (12) angeschlossen ist, und wobei eine mit dem zweiten Kupplungsmechanismus (32, 40) verbundene Inaktivierungsvorrichtung (42, 44, 46) für die Blockierautomatik vorgesehen ist, dadurch gekennzeichnet, daß dem zweiten Kupplungsmechanismus (32, 40) mindestens ein radial nachgiebiges Lager zugeordnet ist, das durch den Gurtstraffvorgang eine Verschiebung von Teilen (32, 40) des zweiten Kupplungsmechanismus zueinander erlaubt, so daß dieser in einen eingerasteten Zustand gelangt.

2. Gurtaufroller nach Anspruch 1, dadurch gekennzeichnet, daß die radiale Verschiebung der Teile (32, 40) zueinander durch die Kraft des Gurtstraffers bei einer Gegenkraft des Gurtbandes erfolgt.

3. Gurtaufroller nach Anspruch 1 oder 2, dadurch gekennzeichnet, daß der zweite Kupplungsmechanismus (32, 40) einen Außenring (40) und ein bei eingerastetem Kupplungsmechanismus formschlüssig mit diesem gekoppeltes Innenrad (32) umfaßt.

4. Gurtaufroller nach Anspruch 3, dadurch gekennzeichnet, daß der Außenring (40) und das Innenrad (32) eine innere bzw. äußere Kupplungsverzahnung in Form einer Sägeverzahnung aufweisen.

5. Gurtaufroller nach Anspruch 3 oder 4, dadurch gekennzeichnet, daß das Innenrad (32) drehfest mit dem Torsionsstab (30) verbunden ist, daß der Außenring (40) drehbar gelagert ist und zum Inaktivieren des Blockiermechanismus bei Drehung des Torsionsstabes (30) in Gurtabzugsrichtung ausgebildete Steuernocken (42) aufweist und daß ein die Drehbewegung des Außenringes (40) begrenzender, den Kraftfluß zwischen Gehäuse (10) und Gurtspule (12) über den Torsionsstab (30) und den Außenring (40) herstellender Anschlag (44, 46) vorgesehen ist.

6. Gurtaufroller nach einem der Ansprüche 3 bis 5, dadurch gekennzeichnet, daß das Innenrad (32) radial nachgiebig gelagert ist.

7. Gurtaufroller nach einem der Ansprüche 3 bis 6, dadurch gekennzeichnet, daß das Innenrad (32) aus Kunststoff besteht.

8. Gurtaufroller nach Anspruch 7, dadurch gekennzeichnet, daß das Innenrad (32) einen flexiblen Abschnitt aufweist, der das radial nachgiebige Lager bildet.

9. Gurtaufroller nach einem der vorstehenden Ansprüche, dadurch gekennzeichnet, daß das radial nachgiebige Lager ein flexibles Kunststoffteil umfaßt.

10. Gurtaufroller nach Anspruch 9, dadurch gekennzeichnet, daß das Kunststoffteil Ausnehmungen (110, 110a; 111; 120, 120a) aufweist, die ein radiales Verlagern der mit dem Kunststoffteil verbundenen Teile erleichtern.

11. Gurtaufroller nach einem der vorstehenden Ansprüche, dadurch gekennzeichnet, daß der Torsionsstab (30) gurtstrafferseitig radial nachgiebig gelagert ist, so daß der Straffvorgang eine radiale Verschiebung des Torsionsstabes (30) und ein Verschieben von auf ihm gelagerten Teilen des zweiten Kupplungsmechanismus (32, 40) bewirkt.

12. Gurtaufroller nach Anspruch 10, dadurch gekennzeichnet, daß ein an einem Torsionsstabfortsatz (102) drehbar gelagertes Teil (22) des ersten Kupplungsmechanismus eine radiale Verschiebekraft beim Straffvorgang in den Torsionsstab (30) einleitet.

13. Gurtaufroller nach Anspruch 11 oder 12, dadurch gekennzeichnet, daß eine radial nachgiebige Lagerplatte (120) für den Torsionsstab (30) vorgesehen ist, die dessen radiale Verschiebung erlaubt.

14. Gurtaufroller nach einem der vorstehenden Ansprüche, dadurch gekennzeichnet, daß die Gurtspule (12) radial nachgiebig gelagert ist, so daß mit ihr verbundene Teile des zweiten Kupplungsmechanismus (32, 40) radial verschiebbar sind.

15. Gurtaufroller nach Anspruch 14, dadurch gekennzeichnet, daß die Gurtspule (12) an einem einstückig mit ihr verbunden Lagerfortsatz (104) flexibel ist.

16. Gurtaufroller nach einem der vorstehenden Ansprüche, dadurch gekennzeichnet, daß der erste Kupplungsmechanismus eine Klinkenkupplung (22, 24) aufweist, die umfaßt:
- ein triebschlüssig mit dem Gurtstraffer verbundenes, an seiner Umfangsfläche nach außen schwenkbare Klinken (24) aufweisendes Klinkenrad (22), das drehbar auf dem Torsionsstab (30) gelagert ist, und
- ein drehfest mit dem Torsionsstab (30) verbundenes, das Klinkenrad (22) umgebendes, zylindrisches Rad (32a) mit einer inneren Kupplungsverzahnung, die den Klinken (24) zugeordnet ist;
- wobei die Klinken (24) mit Betätigung des Gurtstraffers ausschwenken und in die innere Kupplungsverzahnung des zylindrischen Rades (32) eingreifen.

17. Gurtaufroller nach den Ansprüchen 3 und 16, dadurch gekennzeichnet, daß das Innenrad (32) des zweiten Kupplungsmechanismus das zylindrische Rad (32a) des ersten Kupplungsmechanismus bildet.

## Claims

1. A belt retractor with a belt tensioner acting on a belt reel (12) via a first coupling mechanism (22, 24), a housing (10), a vehicle and/or belt webbing-sensitive automatic blocking device for the belt reel (12) and a second coupling mechanism (32, 40) which establishes a force flow between the housing (10) and the belt reel (12) after the belt has been tensioned and upon movement of the belt reel in the direction of belt unwinding, the first coupling mechanism (22, 24) being connected on the power output side and the second coupling mechanism (32, 40) being connected on the power input side to the first end of a torsion bar (30) whose second end is connected to the belt reel (12), and a deactivation device (40, 42, 44, 46) connected to the second coupling mechanism (32, 40) being provided for the automatic blocking device, characterised in that at least one radially yieldable bearing is associated with the second coupling mechanism (32, 40), said bearing allowing parts (32, 40) of the second coupling mechanism to be moved towards each other by the belt tensioning process, so that said coupling mechanism reaches an engaged position.

2. The belt retractor according to Claim 1, characterised in that the radial movement of the parts (32, 40) towards each other is effected by the force of the belt tensioner upon a counterforce of the belt webbing.

3. The belt retractor according to Claim 1 or 2, characterised in that the second coupling mechanism (32, 40) comprises an outer ring (40) and an inner wheel (32) connected to this ring in a form-fitting manner when the coupling mechanism is in the engaged condition.

4. The belt retractor according to Claim 3, characterised in that the outer ring (40) and the inner wheel (32) have an internal and an external toothing, respectively, in the form of a saw-toothing.

5. The belt retractor according to Claim 3 or 4, characterised in that the inner wheel (32) is non-rotatably connected to the torsion bar (30), that the outer ring (40) is rotatably mounted and, for the purpose of deactivating the blocking mechanism when the torsion bar (30) rotates, has controlling cams (42) configured in the direction of belt unwinding and that a stop (44, 46) is provided, limiting the rotational movement of the outer ring (40) and establishing the force flow between the housing (10) and the belt reel (12) via the torsion bar (30) and the outer ring (40).

6. The belt retractor according to any of Claims 3 to 5, characterised in that the inner wheel (32) is mounted so as to be radially yieldable.

7. The belt retractor according to any of Claims 3 to 6, characterised in that the inner wheel (32) consists of plastic.

8. The belt retractor according to Claim 7, characterised in that the inner wheel (32) has a flexible section forming the radially yieldable bearing.

9. The belt retractor according to any of the preceding Claims, characterised in that the radially yieldable bearing comprises a flexible plastic part.

10. The belt retractor according to Claim 9, characterised in that the plastic part has recesses (110, 110a; 111; 120, 120a) which facilitate a radial movement of the parts connected to the plastic part.

11. The belt retractor according to any of the preceding Claims, characterised in that the torsion bar (30), on the belt tensioner side, is mounted so as to be radially yieldable so that the tensioning process causes a radial shifting of the torsion bar (30) and a shifting of parts of the second coupling mechanism (32, 40) which are mounted on it.

12. The belt retractor according to Claim 10, characterised in that a part (22) of the first coupling mechanism rotatably mounted on a torsion bar extension (102) introduces a radial shifting force into the torsion bar (30) during the tensioning process.

13. The belt retractor according to Claim 11 or 12, characterised in that a radially yieldable bearing plate (120) is provided for the torsion bar (30) and allows the latter to move radially.

14. The belt retractor according to any of the preceding Claims, characterised in that the belt reel (12) is mounted so as to be radially yieldable so that parts of the second coupling mechanism (32, 40) connected to it are radially movable.

15. The belt retractor according to Claim 14, characterised in that the belt reel (12) is flexibly mounted on a bearing extension (104) connected with it in one piece.

16. The belt retractor according to any of the preceding Claims, characterised in that the first coupling mechanism has a pawl coupling (22, 24) comprising:
- a ratchet wheel (22) drivingly connected to the belt tensioner and having pawls (24) on its circumferential surface which can be swung outwards, said ratchet wheel being rotatably mounted on the torsion bar (30), and
- a cylindrical wheel (32a) non-rotatably connected to the torsion bar and surrounding the ratchet wheel (22), said cylindrical wheel having an internal coupling toothing associated with the pawls (24);
- the pawls (24) swinging out when the belt tensioner is actuated and engaging in the internal coupling toothing of the cylindrical wheel (32).

17. The belt retractor according to Claims 3 and 16, characterised in that the inner wheel (32) of the second coupling mechanism forms the cylindrical wheel (32a) of the first coupling mechanism.

## Revendications

1. Enrouleur de ceinture avec un raidisseur de ceinture venant en prise sur une bobine de ceinture (12) au moyen d'un premier mécanisme d'accouplement (22, 24), avec un boîtier (10), un système automatique de blocage, sensible aux mouvements du véhicule et/ou de la sangle de la ceinture, pour la bobine de ceinture (12) et un second mécanisme d'accouplement (32, 40), qui établit un flux de forces entre le boîtier (10) et la bobine de ceinture (12) selon le raidissement obtenu de la ceinture et lors du mouvement de la bobine de ceinture (12) dans le sens de détente de ceinture, le premier mécanisme d'accouplement (22, 24) étant relié du côté de la sortie des forces et le second mécanisme d'accouplement (32, 40), étant relié du côté de l'entrée des forces à la première extrémité d'une barre de torsion (30), dont la deuxième extrémité est raccordée à la bobine de ceinture (12), et un dispositif de désactivation (42, 44, 46), relié au deuxième mécanisme d'accouplement (32, 40), étant prévu pour le système automatique de blocage, caractérisé en ce que l'on associe au second mécanisme d'accouplement (32, 40) au moins un support radialement flexible qui permet, grâce au processus de raidissement de la ceinture, un coulissement des pièces (32, 40) du second mécanisme d'accouplement l'une vers l'autre, de telle sorte que celui-ci arrive dans une position d'encliquetage.

2. Enrouleur de ceinture selon la revendication 1, caractérisé en ce que le coulissement radial des parties (32, 40) l'une vers l'autre a lieu grâce à la force du raidisseur de la ceinture lors d'une force antagoniste de la sangle de la ceinture.

3. Enrouleur de ceinture selon la revendication 1 ou 2, caractérisé en ce que le second mécanisme d'accouplement (32, 40) entoure une bague extérieure (40) et une roue intérieure (32), couplée avec celle-ci par engagement de forme, quand le mécanisme d'accouplement est encliqueté.

4. Enrouleur de ceinture selon la revendication 3, caractérisé en ce que la bague extérieure (40) et la roue intérieure (32) présentent une denture intérieure ou extérieure d'accouplement se présentant sous la forme d'une denture en dents de scie.

5. Enrouleur de ceinture selon la revendication 3 ou 4, caractérisé en ce que la roue intérieure (32) est reliée de façon solidaire en rotation avec la barre de torsion (30), en ce que la bague extérieure (40) est montée de façon à pouvoir tourner et présente, pour désactiver le mécanisme de blocage lors de la rotation de la barre de torsion (30), des cames de commande (42) constituées dans le sens de la détente de la ceinture, et en ce que l'on prévoit une butée (44, 46) limitant le mouvement de rotation de la bague extérieure (40) et établissant le flux de forces entre le boîtier (10) et la bobine de ceinture (12) au moyen de la barre de torsion (30) et de la bague extérieure (40).

6. Enrouleur de ceinture selon l'une des revendications 3 à 5, caractérisé en ce que la roue intérieure (32) est montée de façon flexible radialement.

7. Enrouleur de ceinture selon l'une des revendications 3 à 6, caractérisé en ce que la roue intérieure (32) est réalisée en matière plastique.

8. Enrouleur de ceinture selon la revendication 7, caractérisé en ce que la roue intérieure (32) présente une section flexible, qui forme le support flexible radialement.

9. Enrouleur de ceinture selon l'une des revendications précédentes, caractérisé en ce que le support radialement flexible est une pièce flexible en matière plastique.

10. Enrouleur de ceinture selon la revendication 9, caractérisé en ce que la pièce en matière plastique présente des évidements (110, 110a; 111; 120, 120a), qui facilitent un déplacement radial des parties reliées à la pièce en matière plastique.

11. Enrouleur de ceinture selon l'une des revendications précédentes, caractérisé en ce que la barre de torsion (30) est montée de façon flexible radialement du côté du raidisseur de la ceinture, de telle sorte que le processus de raidissement provoque un coulissement radial de la barre de torsion (30) et un coulissement des pièces, qui sont montées sur elle, du second mécanisme d'accouplement (32, 40).

12. Enrouleur de ceinture selon la revendication 10, caractérisé en ce qu'une pièce (22) du premier mécanisme d'accouplement, qui est montée de façon à pouvoir tourner sur un prolongement (102) de la barre de torsion, introduit dans la barre de torsion (30) une force radiale de translation lors du processus de raidissement.

13. Enrouleur de ceinture selon la revendication 11 ou 12, caractérisé en ce que l'on prévoit une plaque d'appui (120), flexible radialement, pour la barre de torsion (30), qui permet son coulissement radial.

14. Enrouleur de ceinture selon l'une des revendications précédentes, caractérisé en ce que la bobine de ceinture (12) est montée de façon flexible radialement, de telle sorte que les parties, qui lui sont reliées, du second mécanisme d'accouplement (32, 40) peuvent coulisser radialement.

15. Enrouleur de ceinture selon la revendication 14, caractérisé en ce que la bobine de ceinture (12) est montée de façon flexible sur un prolongement (104) du support qui est relié avec elle d'une seule pièce.

16. Enrouleur de ceinture selon l'une des revendications précédentes, caractérisé en ce que le premier mécanisme d'accouplement présente un accouplement à cliquet (22, 24), qui comprend :
- une roue à cliquet (22) reliée au raidisseur de la ceinture par entraînement, qui présente des cliquets (24), pouvant pivoter vers l'extérieur, sur sa surface périphérique, et qui est montée de façon à pouvoir tourner sur la barre de torsion (30);
- une roue cylindrique (32a), qui est reliée de façon solidaire en rotation à la barre de torsion (30) et qui entoure la roue à cliquet (22), avec une denture d'accouplement, qui est associée aux cliquets (24);
- les cliquets (24) pivotant vers l'extérieur en actionnant le raidisseur de la ceinture et venant en prise dans la denture intérieure d'accouplement de la roue cylindrique (32).

17. Enrouleur de ceinture selon les revendications 3 et 16, caractérisé en ce que la roue intérieure (32) du second mécanisme d'accouplement forme la roue cylindrique (32a) du premier mécanisme d'accouplement.
